Europäisches Patentamt

European Patent Office

Office européen des brevets

(19)

(11) **EP 1 331 106 A1**

(12) **EUROPEAN PATENT APPLICATION**
published in accordance with Art. 158(3) EPC

(43) Date of publication:
**30.07.2003 Bulletin 2003/31**

(51) Int Cl.7: **B42D 15/10**, G06K 19/07

(21) Application number: **01978973.4**

(86) International application number:
**PCT/JP01/09549**

(22) Date of filing: **31.10.2001**

(87) International publication number:
**WO 02/036358 (10.05.2002 Gazette 2002/19)**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **31.10.2000 JP 2000333593**

(71) Applicant: **KABUSHIKI KAISHA SANKYO SEIKI SEISAKUSHO**
**Suwa-gun, Nagano 393-8511 (JP)**

(72) Inventor: **YOKOZAWA, Mitsuo,**
**c/o K.K. SANKYO SEIKI SEISAKUSHO**
**Suwa-gun, Nagano 393-8511 (JP)**

(74) Representative: **Dealtry, Brian**
**Eric Potter Clarkson,**
**Park View House,**
**58 The Ropewalk**
**Nottingham NG1 5DD (GB)**

(54) **NON-CONTACT IC MEDIUM, AND READ-WRITE SYSTEM USING THE MEDIUM**

(57) A non-contact type IC medium and a read/write system using this medium, and a technique of improving the reliability and the security of them. In the non-contact IC medium, three or more non-contact type IC chips (1) each having an information storage portion and at least one antenna (2) which transmits and receives data in the non-contact manner are arranged at positions enabling reading and writing at the same time, and divided data of data to be recorded and error correction data used to restore the divided data which has failed to be read by the read divided data are recorded in all or a part of the three or more non-contact type IC chips (1).

Fig. 1

**Description**

Technical Field

The present invention relates to a non-contact type IC medium and a read/write system using this medium. More particularly, the present invention relates to a technique for improving the reliability and security of a non-contact type IC medium and a read/write system using this medium.

Background Art

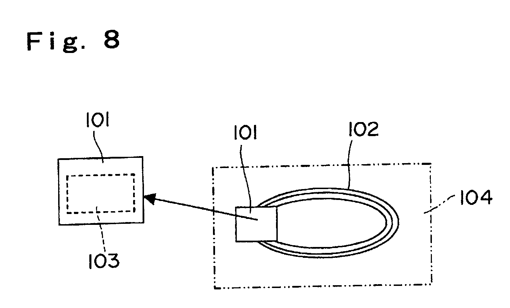

There has conventionally been a technique enabling data transmission in the non-contact manner by using a non-contact type IC chip. A non-contact type IC chip 101 shown in FIG. 8 has an information storage portion 103 in which needed information is written, is constituted by a coil, converts an electromagnetic wave generated by a communication device (not shown) into an operation power, is connected with an antenna 102 used to transmit non-contact data and is mounted on various kinds of medium 104 such as a card together with the antenna 102. Advancement of a technique to mount the non-contact type IC chip 101 and minimization of the chip 101 itself in recent years can greatly reduce the thickness of a medium 104 having the non-contact type IC chip 101 mounted thereon (which will be referred to as a non-contact type IC medium hereinafter). For example, Japanese patent application laid-open No. 306308/1999 discloses that the non-contact type IC chip 101 is added to a passbook.

However, in the non-contact type IC medium 104 such as a card or a passbook which often comes under an external force such as bending during use, a chance failure during use cannot be completely avoided. As main factors of failures of the non-contact type IC medium 104, there are a case that the non-contact type IC chip 101 itself is damaged by an external force and another case that the strength of a connecting portion between the non-contact type IC chip 101 and the antenna 102 cannot resist an external force, which results in detachment or fracture. Occurrence of such failures leads to the unstableness, i.e., information recorded in the non-contact type IC chip 101 can or cannot be read due to poor contact between the non-contact type IC chip 101 and the antenna 102, or recorded information cannot be read at all in case of a serious damage such that the non-contact type IC chip 101 has been cracked.

It is, therefore, an object of the present invention to provide a system with the high reliability and security in a read/write system using a non-contact type IC medium and a non-contact type IC chip.

Disclosure of Invention

To achieve this aim, a non-contact type IC medium according to the present invention comprises three or more non-contact type IC chips each having an information storage portion and at least one antenna for transmitting and receiving data in the non-contact manner are arranged at positions enabling read/write operations at the same time, and divided data of data to be recorded and error correction data used to restore the divided data which has failed to be read by the read divided data are recorded in all or a part of the three or more non-contact type IC chips.

Therefore, the three or more non-contact type IC chips and the antenna are provided at positions enabling read/write operations at the same time, and a communication device which reads/writes data can simultaneously or sequentially perform communication with the non-contact type IC chips. Even if a part of the divided data separately recorded in a plurality of the non-contact type IC chips can not be read, complete data can be read by restoring the divided data which has failed to be read by the error correction data and the read divided data. Further, since a plurality of information storage portions each having a small capacity are used to assure a needed storage capacity and the individual non-contact type IC chips can be minimized, an external force such as bending given to the non-contact type IC medium is hard to directly act on each non-contact type IC chip, and the non-contact type IC medium consequently becomes strong with respect to the external force such as bending. Furthermore, since the non-contact type IC chips are not collectively arranged at one position but separately arranged, the probability that a plurality of the non-contact type IC chips are simultaneously damaged can be reduced. Based on these, a failure rate of the non-contact IC medium can be reduced and the reliability can be greatly improved. Moreover, dividing data to be recorded and distributing the divided data to a plurality of the non-contact type IC chips can avoid fraudulent acts such as illegal copy of the non-contact type IC medium because complete data cannot be obtained from one non-contact type IC chip, for example.

In addition, in the non-contact type IC medium according to the present invention, although a dedicated antenna may be connected with each of three or more non-contact type IC chips, three or more non-contact type IC chips may be separated from each other and connected to one antenna. In this case, arranging the non-contact type IC chips to be physically separated from each other can reduce the probability of simultaneously giving damage to two or more non-contact type IC chips. Additionally, sharing one antenna by three or more non-contact type IC chips can suppress the cost.

Further, it is preferable for the non-contact IC chips to be arranged at positions that gaps between the adjacent non-contact type IC chips become maximum and equal to each other. In this case, the probability that the two or more non-contact type IC chips are simultaneously damaged can be minimized.

Furthermore, as an error correction function included in the non-contact type IC medium according to the present invention, data may be divided into blocks, whose number is smaller than that of the non-contact type IC chips by one, with respect to a plurality of the non-contact type IC chips, the data in blocks may be respectively recorded in the non-contact type IC chips excluding one non-contact type IC chip, an exclusive OR of the divided data may be obtained, and this may be recorded as error correction data in one non-contact type IC chip in which the divided data is not recorded. In this case, even if the divided data of any one block is lost, the lost divided data can be obtained by calculating the exclusive OR of the remaining data, and the simple and secure error correction function can be realized.

Moreover, in the non-contact type IC medium according to the present invention, a contact type IC interface may be also provided to at least one of the three or more non-contact type IC chips. In this case, communication with the contact type IC communication device is enabled through the interface. That is, it is possible to provide an information recording medium (e.g., an individual authentication card or the like) with the high multi-usability and reliability, which includes both the contact type IC interface and the non-contact type IC interface.

In addition, a read/write system using the non-contact type medium according to the present invention has the above-described non-contact type IC medium, and a communication device which discriminates each non-contact type IC chip from discriminating information recorded in the non-contact type IC chips and reads/writes data from/to the non-contact type IC medium.

Therefore, the three or more non-contact type IC chips and the antenna are provided at positions enabling read/write operations at the same time, and the communication device can simultaneously or sequentially communicate with the non-contact type IC chips. The communication device can discriminate a specific non-contact type IC chip from a group of the non-contact type IC chips mounted on the same non-contact type IC medium by using the discriminating information recorded in the non-contact type IC chips. Also, the communication device can recognize the non-contact type IC chips mounted on one non-contact type IC medium as a group, and distinguish it from a group of the contact type IC chips mounted on another non-contact type IC medium. The communication device can recognize each non-contact type IC chip, write the divided data to be written in the respective non-contact type IC chips or the error correction data when writing data, and compose the divided data recorded in the non-contact type IC chips and read it as complete data when reading data. At that time, even if there is the divided data which cannot be read, the divided data which has failed to be read can be restored by the error correction data and the read divided data, thereby reading the complete data.

Brief Description of Drawings

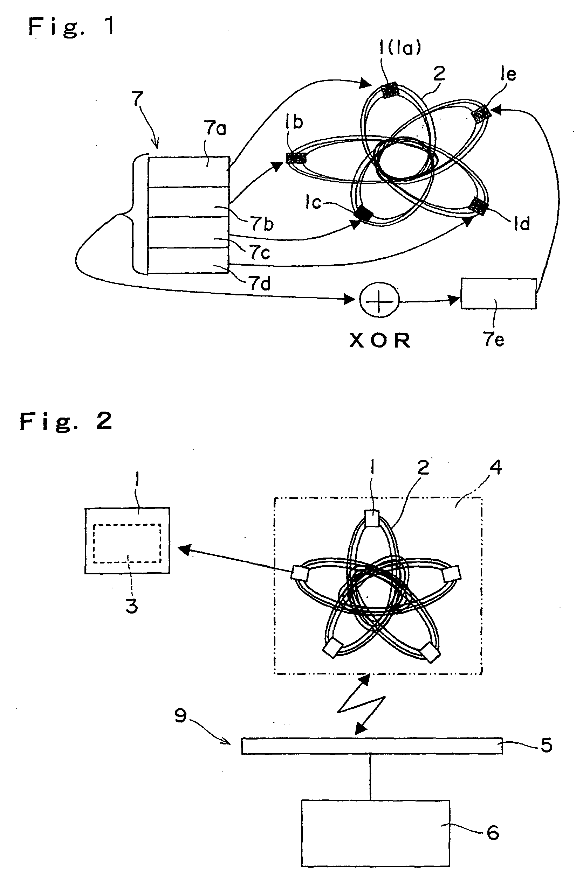

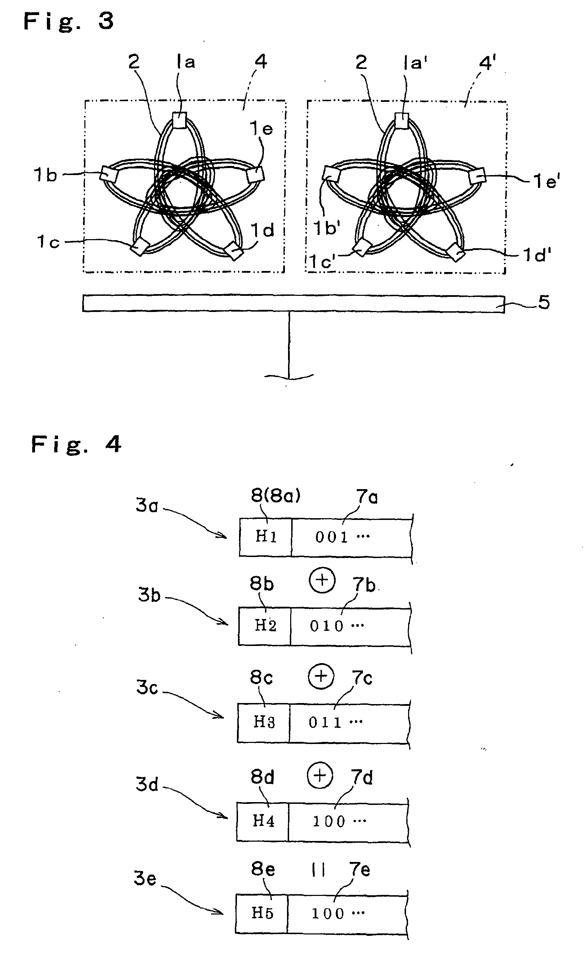

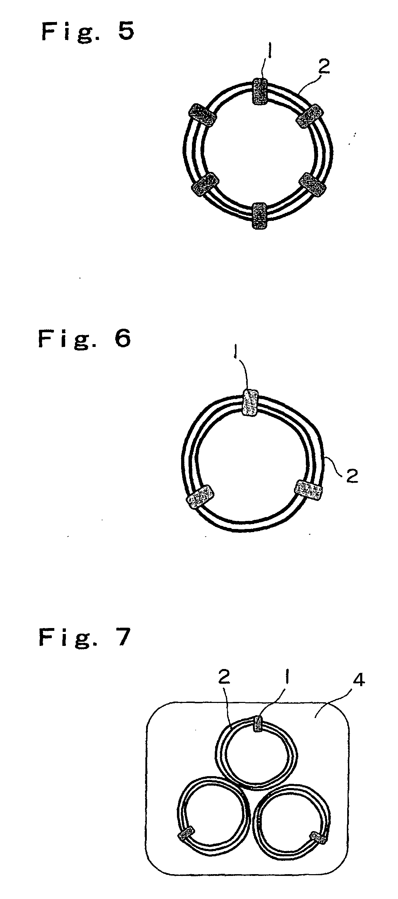

FIG. 1 is a schematic block diagram showing an embodiment of a read/write system using a non-contact type IC medium according to the present invention; FIG. 2 is a schematic block diagram showing an example of the structure of the non-contact type IC medium and a communication device to which the present invention is applied; FIG. 3 is a schematic view showing a state that two non-contact IC mediums exist in an area capable of data transmission by an antenna on a device side; FIG. 4 is an image drawing showing an example of a content of data in an information storage portion to which the present invention is applied; FIG. 5 is a schematic block diagram showing another embodiment of the present invention; FIG. 6 is a schematic block diagram showing still another embodiment of the present invention; FIG. 7 is a schematic block diagram showing yet another embodiment of the present invention; and FIG. 8 is a schematic block diagram showing a conventional non-contact type IC medium having a non-contact type IC chip mounted thereon.

Best Mode for Carrying Out of the Invention

The structure of the present invention will now be described in detail based on embodiments depicted in the accompanying drawings.

FIGS. 1 to 3 show an embodiment of a non-contact type IC medium according to the present invention and a read/write system using this medium. In this non-contact type IC medium 4, three or more non-contact type IC chips 1 each having an information storage portion 3 and at least one antenna 2 which transmits/receives data in the non-contact manner are arranged at positions enabling read/write operations at the same time, and divided data of data to be recorded and error correction data which is used to restore the divided data which has failed to be read by the read divided data are recorded in all or a part of the three or more non-contact type IC chips 1, ..., 1.

The read/write system is configured to include the non-contact type IC medium 4 and a communication device 9 (see FIG. 2). The communication device 9 discriminates each non-contact type IC chip 1 from discriminating information recorded in the non-contact type IC chips 1, ..., 1, and reads or writes data from/to the non-contact type IC medium 4 in the non-contact manner. The communication device 9 has an antenna 5 on the device side for transmitting data to the non-contact type IC medium 4, and a control portion 6 for controlling communication with the non-contact type IC medium 4. Further, the communication device 9 and the non-contact type IC medium 4 are configured to include, e.g., an anti-collision (collision preventing) function which is a known technique so that the communication device 9 can read data recorded in each information storage portion 3 or write data by sequentially calling a plurality of the non-contact type IC chips 1, ..., 1.

The non-contact type IC medium 4 according to this embodiment is of a passive type which obtains an operation power from the device side antenna 5 without requiring an external power supply. The antenna 2 is of a known type which converts an electromagnetic wave into an operation power and is constituted by a coil used to transmit data, for example. The information storage portion 3 of the non-contact type IC chip 1 is, e.g., a non-volatile memory which can be rewritten, and use of an EEPROM (Electrically Erasable Programmable Read Only memory) or the like is preferable.

For example, in this embodiment, five non-contact type IC chips 1a, ..., 1e are mounted on the non-contact type IC medium 4 together with the antennas 2. Each dedicated independent antenna 2 is connected to each of the non-contact type IC chips 1a, ..., 1e. The non-contact type IC chips 1a, ..., 1e are arranged at positions that the antennas 2, ..., 2 partially overlap each other and the five non-contact type IC chips 1a, ..., 1e are separated from each other, for example, gaps between the adjacent non-contact type IC chips 1, 1 become maximum and equal to each other. In other words, the five non-contact type IC chips 1a, ..., 1e are arranged so as to be placed at apexes of a substantially regular pentagon. By arranging the five antennas 2 so as to overlap each other, the five antennas 2, ..., 2 are simultaneously positioned in an area enabling data transmission by the device side antenna 5, and data can be simultaneously transmitted between the device side antenna 5 and the five antennas 2, ..., 2. On the other hand, physically separating and arranging the five non-contact type IC chips 1a, ..., 1e reduce the probability that a plurality of the non-contact type IC chips 1 are simultaneously damaged.

Data 7 which should be held by the non-contact type IC medium 4 is dividedly recorded in the information storage portions 3, ..., 3 of a plurality of the non-contact type IC chips 1. Furthermore, error correction data is recorded in a predetermined information storage portion 3. Therefore, even if some of the non-contact type IC chips 1 fail to operate properly, the data 7 can be read from any other normal non-contact type IC chip 1.

For example, in this embodiment adopting the five non-contact type IC chips 1a, ..., 1e, the data 7 is divided into blocks whose number is smaller than that of the non-contact type IC chips 1 by one, i.e., four blocks as divided data 7a, 7b, 7c and 7d, and the divided data 7a, 7b, 7c and 7d are respectively recorded in the information storage portions 3a, 3b, 3c and 3d of the non-contact type IC chips 1a, 1b 1c and 1d excluding one non-contact type IC chip 1, e.g., the non-contact type IC chip 1e. Also, an exclusive OR of the divided data 7a, 7b, 7c and 7d of the first block to the fourth block is obtained and determined as error correction data 7e, and this data 7e is recorded in the remaining one non-contact type IC chip 1, i.e., the non-contact type IC chip 1e. With such a structure, even if any one of data in the divided data 7a, 7b, 7c and 7d is lost, calculating the exclusive OR of the remaining divided data and the error correction data 7e can obtain the lost divided data (see FIG. 4). Moreover, even if the error correction data 7e is lost, it is needless to say that the data 7 can be read from the divided data 7a, 7b, 7c and 7d. Therefore, even if any one of the five non-contact type IC chips 1a, ..., 1e fails to operate properly and reading of data is impossible, the data 7 can be read from the remaining four non-contact type IC chips 1, ..., 1.

In the information storage portions 3a, ..., 3e, discriminating information (header information) 8a, ..., 8e of the respective non-contact type IC chips 1a, ..., 1e are recorded as well as the divided data 7a, ..., 7d of the data 7 or the error correction data 7e. As the discriminating information, for example, ID numbers inherent to the respective non-contact type IC chips 1a, ..., 1e, a group number indicating that the non-contact type IC chips are mounted on the same non-contact type IC medium 4, numbers indicating the order of reading or writing the divided data 7a, ..., 7d in the same group and others are recorded. The communication device 9 can discriminate a specific non-contact type IC chip 1 from a group of the non-contact type IC chips 1a, ..., 1e mounted on the same non-contact type IC medium 4. In addition, it can distinguish and recognize those chips from non-contact type IC chips 1' mounted on another non-contact type IC medium 4'. For example, as shown in FIG. 3, even if two non-contact type IC mediums 4 and 4' are in an area enabling data transmission by the communication device 9, the communication device 9 can discriminate each of the non-contact type IC chips 1a, ..., 1e and 1a', ..., 1e' and recognize which chips correspond to a group of the non-contact type IC chips 1a, ..., 1e mounted on the same non-contact type IC medium 4. This can be likewise applied to the case that the number of the non-contact type IC mediums 4 is not less than two. That is, the communication device 9 can group and recognize predetermined non-contact type IC chips 1, ..., 1. Additionally, the communication device 9 can recognize the order of reading or writing the divided data 7a, ..., 7d, which have been separately recorded, by the discriminating information 8a, ..., 8e.

As described above, according to the non-contact type IC medium 4 of the present invention and the read/write system using the non-contact type IC medium 4, since they are configured to include three or more non-contact type IC chips 1, ..., 1, the reliability of the non-contact type IC medium 4 can be greatly improved.

For example, it is assumed that Fa is a failure rate of the conventional non-contact type IC medium 104 (see FIG. 8) having mounted thereon only one non-contact type IC chip 101 having an information storage portion 103 with a storage capacity of 1024 byte.

Here, in order to provide a storage capacity of 1024 byte in the non-contact type IC medium 4 according to this embodiment having the five non-contact type IC chips 1 mounted thereon, it is good enough that each of the information storage portions 3a, ..., 3d has a storage capacity of 256 byte which is 1/4 of 1024 byte. Further, the storage capacity of 256 byte is provided for the information storage portion 3e. Since a percentage of the information storage portion is high in an area of the non-contact type IC chip, an area of the non-contact type IC chip is substantially in proportion to the storage capacity of the information storage portion. For example, assuming that an area of the non-contact type IC chip is 2 mm x 2 mm when the storage capacity is 1024 byte, the area of the non-contact type IC chip is only 1 mm x 1 mm with the storage capacity of 256 byte under the same design condition. Here, since a failure rate of the non-contact type IC medium is generally in proportion to a chip area, the failure rate of each non-contact type IC chip 1 according to this embodiment is approximately Fa/4.

In the non-contact type IC medium 4 of this embodiment, the data 7 cannot be read when two or more of the five non-contact type IC chips 1a, ..., 1e fail to operate properly. Therefore, assuming that Fb is a failure rate of the non-contact type IC medium 4, Fb can be represented by a sum total of the probabilities that two or more non-contact type IC chips 1 break down. This failure rate Fb can be represented by, e.g., Expression 1

$$Fb=(Fa/4)^2(1-Fa/4)^3 x10+(Fa/4)^3(1-Fa/4)^2 x10+$$

$$(Fa/4)^4(1-Fa/4)x5+(Fa/4)^5 \qquad \text{Expression 1}$$

Assuming that Fa = 1/10000, Fb is greatly reduced to approximately 1/160000000, and it can be confirmed that the reliability of the non-contact type IC medium 4 can be exponentially improved.

Meanwhile, a main element constituting the unit cost of a semiconductor is an area of a chip. Since a chip unit cost is generally in proportion to a chip area, a chip cost of the non-contact type IC medium 4 is approximately 1.25-fold of that of the conventional non-contact type IC medium 104. That is, the present invention realizes the very large cost effectiveness.

Moreover, since the individual non-contact type IC chips 1 can be minimized while assuring the necessary storage capacity by using a plurality of the information storage portions 3 with the small capacity, an external force such as bending given to the non-contact type IC medium 4 is hard to directly act on each non-contact type IC chip 1 itself. In addition, since the non-contact type IC chips 1 are not collectively arranged at one position but they are separately arranged, the probability that a plurality of the non-contact type IC chips 1 are damaged at the same time can be lowered. Based on these, the failure rate of the non-contact type IC medium 4 can be reduced, and the reliability can be further enhanced.

As an application example of the non-contact type IC medium 4, it is effectively used as a machine reading medium attached to, e.g., a passport, a license, a passbook and others. For example, recording a facial portrait, a fingerprint, a seal-impression and others as the data 7 in the non-contact type IC medium 4 can realize the read/write system which instantaneously perform individual identification off-line. Additionally, according to the present invention, by dividing the data 7 to be recorded and distributing them to a plurality of the non-contact type IC chips 1, ..., 1, a fraudulent act such as illegal copy of the non-contact type IC medium 4 can be avoided because the complete data cannot be obtained from one non-contact type IC chip 1, for example. Here, for instance, the order of recording the divided data 7a, ..., 7d in the non-contact type IC chips 1a, ..., 1e may be regularly rearranged or the rule of the order may be further complicated. Also, the rule may be recorded in only the communication device 9 so that only the communication device 9 can read or write the data 7 from/to the non-contact type IC medium 4. In this case, a fraudulent person can hardly compose the complete data 7 by using the divided data 7a, ..., 7d, thereby further enhancing the security.

Furthermore, even if the two or more non-contact type IC chips 1 have failed to operate, definite functions can be provided based on, e.g., the discriminating information (header information) 8 of the information storage portion 3 as long as at least one non-contact type IC chip 1 functions. For example, inquiries may be made to a host computer in the center on-line based on the ID number included in the discriminating information 8 in order to carry out predetermined processing. It is to be noted that input of the individual information using key input or the like to the communication device 9 as a terminal of the host computer by an owner of the non-contact IC medium 4 may be determined as a condition in this case.

It is to be noted that the above-described embodiment is a preferred embodiment of the present invention but the present invention is not restricted thereto, and various modifications can be made without departing from the scope of the present invention.

For example, as shown in FIGS. 5 and 6, three or more non-contact type IC chips 1, ..., 1 may be separated from each other and connected to one antenna 2. Each non-contact type IC chip 1 can communicate with the communication device 9 without collision while sharing the antenna 2 by an anti-collision function which is a known technique. Sharing one antenna 2 by a plurality of the non-contact type IC chips 1, ..., 1 can reduce the cost of the non-contact type IC medium 4.

Further, for example, the present invention is not restricted to the structure that a plurality of the antennas 2, ..., 2 are partially overlapped and arranged as shown in FIG. 1 and also to a structure that a plurality of the non-contact type IC chips 1 having the dedicated antennas 2 are arranged in an area enabling data transmission of the device side antenna 5 and at positions that the gaps between the adjacent non-contact type IC chips 1, 1 become maximum and equal to each other, and they are mounted on the sheet-like non-contact type IC medium 4 as shown in FIG. 7, for example.

Furthermore, the number of the non-contact type IC chips 1 included in the non-contact type IC medium 4 is not restricted to a specific number as long as it is not less than three, and an appropriate number of the non-contact type IC chips may be provided considering a permissible failure rate or needed memory capacity, a shape and a dimension of the non-contact type IC medium 4 and others.

Moreover, although the error correction method using the exclusive OR is applied in the above-described embodiment, the method of correcting an error is not restricted thereto, and any other known or novel error correction method (e.g., a method using a Hamming code or a Reed-Solomon code) may be applied. In addition, the present invention is not restricted to a configuration that the error correction data is recorded in one information storage portion 3, and it may be separately or redundantly recorded in the respective information storage portions 3 of a plurality of the non-contact type IC chips 1, ..., 1. As an advantage of distributing the error correction data, a frequency of access to the respective information storage portions 3 can be smoothed, and an increase in speed of the read/write processing of the communication device 9 relative to the non-contact type IC medium 4 can be expected as compared with the case that the error correction data is concentrated on one information storage portion 3. Additionally, by distributing the error correction data and complicating the divided data positions, a fraudulent person can hardly compose the complete data by using the divided data, thereby further enhancing the security.

Further, in the read/write system requiring, e.g., data updating, the following operation can be effected by the structure of a plurality of the non-contact type IC chips 1, ..., 1. For example, in the case where five non-contact type IC chips 1a, ..., 1e are used, if there is no response from only the non-contact type IC chip 1d when recording the data 7, division and recording of the data 7 are again performed with respect to the other four non-contact type IC chips 1a, 1b, 1c and 1e. It is to be noted that no response from only the non-contact type IC chip 1d is determined when there is a response indicative of addition of the discriminating information 8a, 8b, 8c and 8e with respect to a call from the communication device 9 but there is no response indicative of addition of the discriminating information 8d within a fixed time. Then, the communication device 9 divides the data 7 into three blocks and record them as divided data 7a, 7b and 7c in the information storage portions 3a, 3b and 3c, respectively. Furthermore, an exclusive OR of the divided data 7a, 7b and 7c is obtained and recorded in the information storage portion 3e as the error correction data 7e. At that time, information (judgment data) indicative of no response from the non-contact type IC chip 1d is also recorded in the information storage portions 3a, 3b, 3c and 3e, respectively. With such a structure, even if there are responses from only three out of the four non-contact type IC chips 1a, 1b, 1c and 1e in the next communication, the data 7 can be normally acquired. On the other hand, even if there is a response from the non-contact type IC chip 1d, which did not send a response in the previous communication, in the current communication, the communication device 9 can recognize the fact that the non-contact type IC chip 1d is not used in the data recording by the judgment data, which can not be an obstacle to acquisition of the data 7. Incidentally, when adopting such a structure, an additional capacity is provided to the memory capacity of each information storage portion 3 in advance taking a reduction in a data storage area of the information storage portion 3 into consideration.

Furthermore, although the non-contact type IC medium 4 must be provided with three or more non-contact type IC chips 1, ..., 1 in order to obtain the advantages according to the present invention, it may be configured to include, e.g., two non-contact type IC chips 1, 1 in some cases. In such a case, the same data 7 may be recorded in two information storage portions 3, 3, respectively. That is, the non-contact type IC medium 4 holds the data 7 in the redundant manner. As a result, even if one of the non-contact type IC chips fails to operate properly, there is no trouble in communication of the non-contact type IC medium 4 as long as the other non-contact type IC chip 1 functions. The structure of redundantly holding the data 7 is not appropriate for the non-contact type IC medium 4 requiring the forgery/falsification prevention since even one non-contact type IC chip 1 can normally function as different from the case that the data 7 is dividedly recorded, but it may be effective depending on a content of the data 7. For example, it is suitable for a card or the like in which the required minimum individual information (e.g., a blood type) which is necessary for the emergency care is recorded. It is to be noted that a failure rate can be reduced by the power of the number of the non-contact type IC chips 1 if the number of the non-contact type IC chips is increased and a plurality of sets of the same data 7 are held.

Moreover, although dividedly recording the data 7 or redundantly recording the data 7 in a plurality of the non-contact type IC chips 1, ..., 1 can reduce the failure rate and increase the reliability, a method of utilizing a plurality of the non-contact type IC chips 1, ..., 1 is not necessarily restricted to only improvement of the reliability. For example, a plurality of the non-contact type IC chips 1 may be provided in order to extend the storage capacity: Two or more non-contact type IC chips 1 are used to obtain the needed storage capacity, and the data 7 is sequentially recorded in each information storage portion 3. In this case, the communication device 9 can group and recognize a plurality of the non-contact type IC chips 1, ..., 1 based on the discriminating information 8 like the above-described embodiment, and sequentially read the data 7 recorded in a plurality of the information storage portions 3, ..., 3.

In addition, the non-contact type IC medium 4 according to the present invention may be applied to a card serving both as a contact and a non-contact cards (hybrid card) in which one chip includes both the interface of the contact type IC card and the interface of the non-contact type IC card. In this case, the interface of the contact type IC card (IC contact point) is also provided to at least one non-contact type IC chip 1 in a plurality of the non-contact type IC chips 1, ..., 1. When using the non-contact type IC medium 4 in a contact type IC card reader, power is supplied to only the non-contact type IC chip having the IC contact point and this chip functions as the contact type IC chip, thereby reading/writing the data. Incidentally, when adopting such a structure, the data area of the information storage portion 3 in which data is rewritten by the contact type IC card reader must not be an obstacle to the error correction function. For example, if the divided and recorded data is updated by the contact type IC card reader, matching with the error correction data can not be achieved, and proper error correction cannot be performed. Thus, the data area in which data is rewritten by the contact type IC card reader may be held in the data area other than the error correction target area such as the discriminating information (header information) 8. It is to be noted that the conformation of the non-contact type IC medium 4 is not necessarily restricted to cards in this example that the IC contact point is provided to at least one non-contact type IC chip, and it is needless to say that it may be any other medium such as a passport or a passbook.

## Claims

1.  A non-contact type IC medium, comprising: arranging three or more non-contact type IC chips each having an information storage portion and at least one antenna for transmitting and receiving data in non-contact manner at positions enabling reading and writing at the same time; and recording divided data of data to be recorded and error correction data used for restoring the divided data having failed to be read by the divided data having been read in all or a part of the non-contact type IC chips.

2.  The non-contact type IC medium according to claim 1, wherein the non-contact type IC chips are separated from each other and connected to the antenna.

3.  The non-contact type IC medium according to claim 1, wherein the non-contact type IC chips are arranged at positions that gaps between the adjacent non-contact type IC chips become maximum and equal to each other.

4.  The non-contact type IC medium according to claim 1, wherein the non-contact type IC chips are connected to one antenna.

5.  The non-contact type IC medium according to claim 1, wherein data is divided into blocks whose number is smaller than that of the non-contact type IC chips by one with respect to the non-contact type IC chips and respectively recorded in the non-contact type IC chips excluding one non-contact type IC chip, and an exclusive OR of the divided data is obtained and recorded as the error correction data in one non-contact type IC chip in which the divided data has not been recorded.

6.  The non-contact type IC medium according to claim 1, wherein a contact type IC interface is also provided to at least one of the three or more non-contact type IC chips.

7.  A read/write system using a non-contact type IC medium, comprising: the non-contact type IC medium defined in claim 1; and a communication device for discriminating each non-contact type IC chip based on discriminating information recorded in the non-contact type IC chips and performs reading of data or writing of data with respect to the non-contact type IC medium.

# Fig. 1

XOR

# Fig. 2

# Fig. 3

# Fig. 4

Fig. 5

Fig. 6

Fig. 7

Fig. 8

<div align="center">

### INTERNATIONAL SEARCH REPORT

</div>

| | | International application No. |
| --- | --- | --- |
| | | PCT/JP01/09549 |

| A. CLASSIFICATION OF SUBJECT MATTER |
| --- |
| Int.Cl$^7$   B42D15/10, G06K19/07 |

According to International Patent Classification (IPC) or to both national classification and IPC

| B. FIELDS SEARCHED |
| --- |
| Minimum documentation searched (classification system followed by classification symbols) |
| Int.Cl$^7$   B42D15/10, G06K19/07 |

Documentation searched other than minimum documentation to the extent that such documents are included in the fields searched

| Jitsuyo Shinan Koho | 1922-1996 | Toroku Jitsuyo Shinan Koho | 1994-2002 |
| --- | --- | --- | --- |
| Kokai Jitsuyo Shinan Koho | 1971-2002 | Jitsuyo Shinan Toroku Koho | 1996-2002 |

Electronic data base consulted during the international search (name of data base and, where practicable, search terms used)

| C. DOCUMENTS CONSIDERED TO BE RELEVANT | | |
| --- | --- | --- |
| Category* | Citation of document, with indication, where appropriate, of the relevant passages | Relevant to claim No. |
| Y | JP 11-31207 A (TOPPAN PRINTING CO., LTD.), 02 February, 1999 (02.02.1999), Full text; all drawings   (Family: none) | 1-7 |
| Y | JP 5-324579 A (Hitachi, Ltd.), 07 December, 1993 (07.12.1993), Par. Nos. [0002] to [0011]; Figs. 4 to 5   (Family: none) | 1-7 |
| Y | JP 8-190463 A (Nissin Electric Co., Ltd.), 23 July, 1996 (23.07.1996), Full text; all drawings   (Family: none) | 1-7 |
| Y | JP 11-129659 A (Konica Corporation), 18 May, 1999 (18.05.1999), Par. Nos. [0018] to [0023]; Figs. 2 to 4   (Family: none) | 2-3 |

| ☐ Further documents are listed in the continuation of Box C. | ☐ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 29 January, 2002 (29.01.02) | 12 February, 2002 (12.02.02) |

| Name and mailing address of the ISA/ | Authorized officer |
| --- | --- |
| Japanese Patent Office | |
| Facsimile No. | Telephone No. |

Form PCT/ISA/210 (second sheet) (July 1992)